(19) Europäisches Patentamt
European Patent Office
Office européen des brevets

(11) EP 0 618 179 B1

(12) EUROPÄISCHE PATENTSCHRIFT

(45) Veröffentlichungstag und Bekanntmachung des Hinweises auf die Patenterteilung:
**02.05.1997 Patentblatt 1997/18**

(51) Int Cl.6: **C04B 41/84**, C08F 220/12, C09D 133/10, C04B 41/63

(21) Anmeldenummer: **94104144.4**

(22) Anmeldetag: **17.03.1994**

# (54) Prepolymerlösung schützende und stabilisierende Imprägnierung von porösen Baustoffen

Prepolymer solution for protecting and stabilising impregnation of porous building materials

Solution de prépolymère pour une imprégnation protectrice et stabilisatrice des matériaux de contruction poreux

(84) Benannte Vertragsstaaten:
**DE ES FR GB IT SE**

(30) Priorität: **27.03.1993 DE 4310005**

(43) Veröffentlichungstag der Anmeldung:
**05.10.1994 Patentblatt 1994/40**

(73) Patentinhaber: **Degussa Aktiengesellschaft**
**60311 Frankturt (DE)**

(72) Erfinder:
- **Ragnetti, Maurizio, Dr.**
  **D-55246 Mainz-Kostheim (DE)**
- **Sasse, Hans R., Prof. Dr.**
  **D-52070 Aachen (DE)**
- **Höcker, Hartwig, Prof. Dr.**
  **D-52076 Aachen (DE)**
- **Honsinger, Detlef J., Dr.**
  **D-52134 Herzogenrath (DE)**
- **Puterman, Moshe, Dr.**
  **32000 Haifa (IL)**
- **Schneider, Uwe, Dr.**
  **D-40468 Düsseldorf (DE)**
- **Wagener, Silke**
  **D-52074 Aachen (DE)**

(56) Entgegenhaltungen:
**EP-A- 0 270 427** **DE-B- 1 056 827**
**GB-A- 1 484 622**

- **PATENT ABSTRACTS OF JAPAN vol. 17, no. 266 (C-1062) 25. Mai 1993 & JP-A-50 005 013 (HATSUTORI YOSHITA) 14. Januar 1993**
- **PATENT ABSTRACTS OF JAPAN vol. 12, no. 143 (C-492) 30. April 1988 & JP-A-62 260 870 (NIPPON SHOKUBAI KAGAKU KOGYO CO LTD) 13. November 1987**
- **DATABASE WPI Section Ch, Week 8801, Derwent Publications Ltd., London, GB; Class A82, AN 85 319416 & JP-A-60 221 450 (NIPPON SHOKUBAI KAGAKU) 6. November 1985**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 618 179 B1

Printed by Jouve, 75001 PARIS (FR)

## Beschreibung

Die wichtigsten Baumaterialien neben dem Stahl sind kapillarporige Natursteine, mineralische Mörtel und Betone sowie Hölzer. Sie unterscheiden sich nicht nur in ihren bevorzugten Anwendungsgebieten, sondern auch in ihrer Widerstandsfähigkeit gegenüber Umweltfaktoren wie Temperatur- und Feuchtewechseln, Wasser, Salzen, Säuren, UV-Strahlen und mikrobiologischen Angriffen. Besonders auffallend sind die Schäden an Kulturdenkmälern aus verwitterungsempfindlichen Natursteinen, wie Sand- und Kalkstein, die atmosphärischen Einwirkungen ausgesetzt sind.

Zum Schutz dieser Baumaterialien haben in den letzten zwei Jahrzehnten synthetische Produkte und unter ihnen vor allem siliciumorganische Verbindungen und Polymere breite Anwendung gefunden. Für die Stoffklasse der siliciumorganischen Verbindungen liegen bis heute die meisten praktischen Anwendungen und Erfahrungen vor. Guten Resultaten stehen Fehlschläge gegenüber, die die Akzeptanz dieser Materialien in der Denkmalpflege stark einschränken. Die marktüblichen Systeme erfüllen die komplexen Anforderungen an Steinschutzstoffe dabei in unterschiedlichem Maße. Probleme ergeben sich vor allem auf carbonatisch und tonig gebundenen Sandsteinen (mangelnde Adhäsion). Feuchte Untergründe sowie Salzkontaminationen sind weitere kritische Punkte. Für einen Überblick über die Vielseitigkeit und die Probleme der heutigen Technik sei auf folgende Literatur hingewiesen:

- R. Snethlage: Steinkonservierung - zum Stand der Forschung, München, Bayerisches Landesamt für Denkmalpflege. In: Arbeitshefte des Bayerischen Landesamtes für Denkmalpflege (1984), Nr. 31.
- R. Wihr: Restaurierung von Steindenkmälern. 2. Auflage, München: Callway (1986).
- D. Honsinger: Strukturmerkmale polymerimprägnierter Sandsteine - ein Beitrag zur makroskopischen Beurteilung - Dissertation, RWTH Aachen (1990).

Probleme ergeben sich neben den genannten begrenzten Anwendungsbereichen auch daraus, daß bei vielen heute verfügbaren Bautenschutzmitteln die Wirkung nach wenigen Jahren so nachläßt, daß kostspielige, wiederholte Applikationen erforderlich werden.

Zum Beispiel beschreibt die japanische Anmeldung JP 2117977 die Anwendung von wässrigen, alkoxysilanhaltigen Dispersionen, die aber nur einen äußerlichen Schutzfilm aufbauen und keine nennenswerte Eindringtiefe in das Steingefüge aufweisen. Ähnliches Verhalten wird für Methacrylat-Silicon-Pfropfpolymerisate in der DE 37 02 542 gezeigt, die nur eine hydrophobierende Funktion erfüllen. Auch das US-Patent 4 716 188 beschreibt nur wasserabweisende polymer- und silanhaltige Lacke für Beschichtungszwecke. Deutlich höhere Eindringtiefen erreichen z. B. die Schutzmittel nach den Anmeldungen JP 1113471 und EP 53 874, in denen der Stein mit Monomer bzw. mit Polymersirup evtl. unter Vakuum, wie in DE 30 12 099 A1, behandelt wird. Das Verfahren gemäß DE 30 12 099 A1, das dem Stein außer der Hydrophobierung aufgrund einer vollständigen Porenfüllung auch eine deutlich höhere mechanische Stabilität verleiht, eignet sich aber nur für freistehende, transportable Objekte, die keinen eigenen Wasserhaushalt besitzen. Darüberhinaus muß die Applikation in stationären Anlagen durchgeführt werden. Die anderen o. g. Verfahren verlangen die Handhabung von großen Mengen Monomeren im Freien, wovon aus Umwelt- und Arbeitsschutzgründen abzuraten ist.

Kieselsäureester sind die am häufigsten eingesetzten Festigungsmittel, die jedoch keinerlei hydrophobierende Wirkung aufweisen. Bei nicht sehr sorgfältig dosierter Tränkung besteht in der Randzone die Gefahr der Porenverstopfung und der exzessiven Steigerung der Festigkeit bzw. des Elastizitätsmoduls.
Beide Befunde führen zwangsläufig zur sogenannten Schalenbildung, die lokale bis großflächige Ablösungserscheinungen bewirken kann. Für nähere Informationen siehe:

- A. Stroh: Zukunftsorientierte Aspekte bei der Entwicklung neuartiger Steinfestigungs- und Steinschutzmittel auf siliciumorganischer Basis. In: Bautenschutz und Bausanierung (1987), Sonderheft "Bausubstanzerhaltung in der Denkmalpflege", S. 72 - 73 - 1. Statusseminar des BMFT "Erhaltung von Naturstein", 17./18.12.1986, Mainz
- R. Snethlage: Messungen zur Dauerhaftigkeit von Hydrophobierungen an Sandsteingebäuden. In: Bautenschutz und Bausanierung (1987), Sonderheft "Bausubstanzerhaltung in der Denkmalpflege", S. 16 - 19 - 1. Statusseminar des BMFT "Erhaltung von Naturstein", 17./18.12.1986, Mainz
- E. Wendler, L. Sattler: Untersuchungen zur Dauerhaftigkeit von Steinkonservierungen mit siliciumorganischen Stoffen. In: Bautenschutz und Bausanierung 12 (1989), Sonderheft "Bausubstanzerhaltung in der Denkmalpflege", S. 70 - 75 - 2. Statusseminar des BMFT "Untersuchung und Eindämmung der Gesteinsverwitterung an Baudenkmälern", 14./15.12.1988, Wuppertal.

Als am besten geeignet für den Bautenschutz werden filmbildende, stabilisierende Imprägnierungen angesehen, die die Baumaterialien nicht vollständig versiegeln und die Porenkanäle offen lassen.

Die komplexen Funktionen einer filmbildenden, stabilisierenden Imprägnierung sowie die Anforderungen an technologische geeignete Produkte werden in

- H. R. Sasse: Neuartiges Konzept für den Schutz gefährdeter Natursteinbauten, in Symposium über Steinzerfall, Bild der Wissenschaft, Bonn, 15. April 1988.

näher beschrieben. Von besonderer Bedeutung ist hierbei, daß nennenswerte Änderungen der Wasserdampfdiffusionseigenschaften nicht auftreten, da die großen kapillaren Porenkanäle offen bleiben.

Aufgabe der vorliegenden Erfindung ist daher ein Imprägniermittel mit hoher Eindringtiefe für verschiedene feste, poröse Baustoffe, das eine hydrophobierende und eine festigende Funktion gleichzeitig erfüllen soll und dabei nicht porenfüllend ist.

Diese Aufgabe wird in besonderer Weise durch die hier beschriebene Erfindung gemäß der Ansprüche gelöst.

Dabei handelt es sich um Prepolymere, die schematisch folgenderweise aufgebaut sind:

$$----- A_a ----- B_b ----- C_c ----- D_d -----$$

worin:

A ein (Meth)acrylatester mit einer Alkoholkomponente aus einer C1 bis C18 linearen, cyclischen oder verzweigten Alkylkette oder Aromat oder eine Mischung solcher Ester ist. Die Schreibweise (Meth)acrylat bedeutet "sowohl Acrylat als auch Methacrylat". Bevorzugt sind n-Propylmethacrylat, i-Propylmethacrylat, n-Butylmethacrylat, Methylacrylat, Ethylacrylat, i-Butylacrylat;

B ein ethylenisch ungesättigtes, eine Epoxidfunktion tragendes Monomer ist, wie Allylglycidylether, Glycidyl(meth)acrylat; bevorzugt ist Glycidylmethacrylat;

C ein ethylenisch ungesättigtes, Alkoxysilangruppen tragendes Monomer ist mit der Struktur

$$R --- P --- Si\,(OR')_{r'}R''_{r'''}$$

in dem

R = (Meth)acryloyloxy, Styryl, Vinyl, Allyl, Butenyl,
P = $(CH_2)_x$ und x = 0 bis 6, bevorzugt 3,
R' = C1-8, lineare, verzweigte oder cyclische Alkylkette sowie eine Phenylgruppe oder $CH_2$-O-$CH_2$-$CH_3$ und $CH_2$-$CH_2$-O-$CH_3$,
R'' = C1-8, lineare, verzweigte oder cyclische Alkylkette sowie eine Phenylgruppe,

$$1 \leq r' \leq 3 \text{ (ganze Zahlen)}$$

$$0 \leq r'' \leq 2 \text{ (ganze Zahlen)}$$

und

$$r' + r'' = 3$$

ist,
bevorzugt sind

3-(Methacryloyloxy)propyltriethoxysilan,
3-(Methacryloyloxy)propyltrimethoxysilan;
Vinyltriethoxysilan,
Vinyltrimethoxysilan; und

D ein einfach oder mehrfach ungesättigtes Monomer ist, das mit A, B und ggf. C copolymerisierbar ist;

wobei

| | | | | | |
|---|---|---|---|---|---|
| a zu | 48-98 Gew.% | bevorzugt: | 65-95 | insbesondere : | 80-98 |
| b zu | 0,5-50 " | | 1-20 | | 1-15 |
| c zu | 0-30 " | | 0-20 | | 0-10 |
| d zu | 0-50 " | | 0-30 | | 0-15 |

vorliegen, wobei

$$a + b + c + d = 100 \text{ Gew.-\%}$$

ergibt.

Die Erfindung betrifft die Verwendung solcher Prepolymere im Bautenschutz bzw. zur Imprägnierung von porösen Baumaterialien, insbesondere Stein, vorteilhaft unter Verwendung eines Vernetzers.

Beispiele für das Monomer D:

- Einfach ungesättigte Monomere,
  wie (Meth)acrylamid, (Meth)acrolein, (Meth)acrylnitril, Vinylpyridin, Vinylacetat, Allylacetat, N-Vinylpyrrolidon, N-Vinylformamid, Styrol, $\alpha$-Methylstyrol, Methyl-, Ethyl-, Butylvinylether, Methylvinylketon

- Mehrfach ungesättigte Monomere,
  wie Ester aus Ethylenglykol, Propylenglykol, Butandiol, Hexandiol, mit (Meth)acryl-, Malein-, Fumarsäure; Ester aus Polyethylenglykol, Copolymeren aus Ethylen- und Propylenglykol mit (Meth)acrylsäure, Maleinsäure, Fumarsäure; zwei- bis dreifach mit (Meth)acryl- oder Maleinsäure veresterte Anlagerungsprodukte von Ethylenoxid und/oder Propylenoxid an Trimethylolpropan; mindestens zweifache Ester aus (Meth)acryl-, Fumar-, Maleinsäure und Glycerin, Pentaerythrit, Triallylamin, Tetraallylethylendiamin, Polyethylenglykoldivinylether, Trimethylolpropandiallylether, Butandioldiallylether, Pentaerythrittriallylether, Divinylharnstoff, Divinylbenzol, Allyl(meth)acrylat, Diallylphthalat, Butandioldivinylether

Vorzugsweise ist der (Meth)acrylatester A zu min. 30 Gew.-%, vorteilhaft zu min. 50 Gew.-% und insbesondere zu min. 70 Gew.-%, aus Butylmethacrylat.

Das Prepolymer hat günstigerweise ein relatives Molekulargewicht von 1.000 bis 200.000, bevorzugt 2.000 bis 50.000, vorteilhaft 2.000 - 20.000 und insbesondere 2.000 - 10.000; in diesen Bereichen liegen gute Polymereigenschaften und insbesondere eine geringe Lösungsviskosität mit tiefer Penetration in das Baumaterial.

Zur Anwendung kommen die Prepolymeren in Lösung, als Lösemittel kommen Alkane (linear, verzweigt, cyclisch), Aromaten, Ester, Ketone, Alkohole und Ether sowie Gemische aus diesen Lösemitteln in Frage.

Bevorzugt sind Petrolether (Alkangemische), Toluol, Xylol, Butylacetat.

Um eine gute Filmbildung und Haftung am Baumaterial zu erhalten, werden die Prepolymere im Baumaterial selbst vernetzt. Hierfür können Vernetzer (V) gleichzeitig oder in einem zweiten Arbeitsgang appliziert werden. Hierbei kann es sich um niedermolekulare und polymere Verbindungen handeln. Handelt es sich um einen niedermolekularen Vernetzer, so besitzt er die allgemeine Formel $Q(X)_n$, in der

n = 2-4, vorzugsweise 2,

X unabhängig voneinander eine geeignete funktionelle, insbesondere mit Epoxid vernetzende Gruppe, wie Hydroxy, Carboxy, primäres Amin, sekundäres Amin, insbesondere aber primäres und sekundäres Amin und

Q einen aliphatischen Kohlenwasserstoffrest mit 2 bis 18, vorzugsweise 6 bis 10 C-Atomen oder einen cycloaliphatischen Kohlenwasserstoffrest mit 4 bis 15, vorzugsweise 5 bis 10 C-Atomen, wobei die Kohlenstoffatome voneinander durch Heteroatome wie z. B. -O-, -N-, -Si- unterbrochen sein können und ggf. auch funktionelle Gruppen wie =O tragen.

bedeuten.

Geeignete derartige niedermolekulare Verbindungen sind 1,12-Diaminododecan, Isophorondiamin, 3,3,5-Trimethylhexamethylendiamin, 1,6-Hexandiol, 1,4-Cyclohexandiol.

Es kann jedoch auch ein polymerer Vernetzer verwendet werden. Q kann dann ein Polydimethylsiloxan der allgemeinen Formel $[(CH_3)_2Si\text{-}O\text{-}]_m$ mit m = 4 bis 50, vorzugsweise 5 bis 20 bedeuten.
Es können darüberhinaus auch Polymere mit reaktiven funktionellen Gruppen in den Seitenketten zur Vernetzung eingesetzt werden. Diese Gruppen sollen eine vernetzende Reaktion mit den funktionellen Gruppen in den Seitenketten des Prepolymeren ermöglichen. Dabei kann es sich um Gruppen handeln wie Hydroxygruppen, Carboxygruppen, primäre Amine, sekundäre Amine, insbesondere aber um primäre und sekundäre Amine. Beispiele hierfür sind Polyethylenimin und Polyaminoalkyl(meth)acrylat. Bevorzugt eingesetzt werden Isophorondiamin und aminoterminierte Polydimethylsiloxane.

Das Prepolymer kann durch radikalische Polymerisation hergestellt werden. Für einen aktuellen Überblick über mögliche Polymerisationsverfahren siehe z. B. "Encyclopedia of Polymer Science and Technology" John Wiley & Sons Publ. New York 1988, bes. Vol. 13, 15 und 16.

Somit kann das Polymer als Suspensions-, Emulsions- sowie Fällungspolymerisat hergestellt werden, wobei für eine korrekte Applikation diese Produkte nach ihrer Herstellung in Lösung gebracht werden.
Zweckmäßigerweise kann aber das Produkt als Lösungspolymerisat hergestellt werden (s. in der genannten "Encyclopedia" Vol. 15).

Das Monomer A stellt im allgemeinen die Hauptkomponente im Makromolekül dar und von ihm hängt im wesentlichen die Glasübergangstemperatur ($T_g$) des polymeren Schutzmittels ab. Eine zu hohe Glasübergangstemperatur charakterisiert oft spröde Strukturen, während eine zu niedrige $T_g$ Klebrigkeit verursacht. Außerdem variieren die Stabilität und die Elastizität des Polymergefüges im Stein bzw. Baumaterial mit Art und Dichte der Vernetzung. Deshalb soll das Monomer A je nach Baumaterial klimatischen Bedingungen, Anteil der zur Vernetzung befähigten Monomeren B und C sowie Art und Funktionalität des Vernetzers V gewählt werden. Unter den häufigsten Applikationsbedingungen zeigen Polymerisate mit einer Glasübergangstemperatur zwischen -30°C und +50°C die besten Eigenschaften. Bevorzugt werden also Methyl-, Ethyl-, n-Propyl-, i-Propyl-, und i-Butylacrylat, sowie n-Propyl-, i-Propyl-, n-Butyl-, Hexyl-, Cyclohexyl- und 2-Ethylhexylmethacrylat sowie Mischungen aus diesen Monomeren untereinander oder mit Methyl-, Ethyl-, i-Butyl-, t-Butylmethacrylat sowie t-Butylacrylat.

Das Monomer B ist ein wesentlicher Bestandteil dieser Erfindung und trägt eine Epoxidfunktion, die zur Vernetzung der Makromoleküle im Baumaterial dient. Insbesondere geeignet sind zu einer statistischen Copolymerisation mit den Monomeren A (und evtl. C und D) befähigte Monomere wie Allyl- und Butenylglycidylether sowie Glycidyl(meth)acrylat. Bevorzugt ist Glycidylmethacrylat.

Über Anteil und Art des Monomeren B, wie auch des Vernetzers V, kann der Aufbau eines polymeren Netzwertes und damit die Filmbildung gesteuert werden. Die Kombination aus erfindungsgemäßem Prepolymer mit Vernetzer, z. B. IPDA, zeigt unter Berücksichtigung der Kriterien Reaktivität (entspr. Viskositätsanstieg), Filmbildung und Chemikalienbestädigkeit des Films beste Ergebnisse. Ohne Monomere C läßt sich die Dauer bis zur Ausbildung eines makroskopisch festen Polymerfilms (unter Vernetzung mit IPDA) leicht auf beispielsweise 10 - 40 Tage, insbesondere 20 - 30 Tage einstellen, wodurch hohe Eindringtiefen (beispielsweise bis über 60 mm) möglich sind. Entsprechende Filme zeigen auch nach 28 tägiger Lagerung in 5 %igen wässrigen Lösungen von Säuren oder Basen weder makroskopisch noch mittels PAS-FTIR-Spektroskopie und XPS einen nennenswerten Abbau. Unter Verwendung von Monomer C läßt sich die Reaktionszeit deutlich verkürzen, z.B. auf 1 - 10 Tage. Ohne Monomer B ist die Eindringtiefe der Lösung zu gering und die festigende Wirkung des Schutzmittels unzureichend.

Das Monomer C ist mit den Monomeren A, B und evtl. D radikalisch copolymerisierbar und trägt mindestens eine Alkoxysilaneinheit. Diese können durch inter- und intramolekulare Vernetzung sowie durch Reaktion mit den oft im Stein vorhandenen Silanolgruppen die Haftung im Steingefüge erhöhen. Denkbar sind folgende Strukturen:

$$R \text{ --- } P \text{ --- } Si\,(OR')_{r'}R''_{r''}$$

mit

R = (Meth)acryloyloxy, Styryl, Vinyl, Allyl, Butenyl
P = $(CH_2)_x$ mit x = 0 bis 6; bevorzugt x = 3
R' = C1-8, lineare, verzweigte oder cyclische Alkylkette sowie eine Phenylgruppe oder $CH_2\text{-}O\text{-}CH_2\text{-}CH_3$ und $CH_2\text{-}CH_2\text{-}O\text{-}CH_3$
R'' = C1-8, lineare, verzweigte oder cyclische Alkylkette sowie eine Phenylgruppe,

$$1 \leq r' \leq 3 \text{ (ganze Zahlen)}$$

$$0 \leq r'' \leq 2 \text{ (ganze Zahlen)}$$

und

$$r' + r'' = 3.$$

Bevorzugt sind

3-(Methacryloyloxy)propyltriethoxysilan,
3-(Methacryloyloxy)propyltrimethoxysilan,
Vinyltriethoxysilan,
Vinyltrimethoxysilan.

Das Monomer D ist mit den Monomeren A, B und evtl. C radikalisch copolymerisierbar und beeinträchtigt diese nicht in ihrer Funktion.

Einsetzbar sind beispielsweise:

- Einfach ungesättigte Monomere:
  wie (Meth)acrylamid, (Meth)acrolein, (Meth)acrylnitril, Vinylpyridin, Vinylacetat, Allylacetat, N-Vinylpyrrolidon, N-Vinylformamid, Styrol, α-Methylstyrol, Methyl-, Ethyl-, Butylvinylether, Methylvinylketon;

- mehrfach ungesättigte Monomere:
  wie Ester aus Ethylenglykol, Propylenglykol, Butandiol, Hexandiol, mit (Meth)acryl-, Malein-, Fumarsäure; Ester aus Polyethylenglykol, Copolymeren aus Ethylen- und Propylenglykol mit (Meth)acrylsäure, Maleinsäure, Fumarsäure; zwei- bis dreifach mit (Meth)acryl- oder Maleinsäure veresterte Anlagerungsprodukte von Ethylenoxid und/oder Propylenoxid an Trimethylolpropan; mindestens zweifache Ester aus (Meth)acryl-, Fumar-, Maleinsäure und Glycerin, Pentaerythrit, Triallylamin, Tetraallylethylendiamin, Polyethylenglykoldivinylether, Trimethylolpropandiallylether, Butandioldiallylether, Pentaerythrittriallylether, Divinylharnstoff, Divinylbenzol, Allyl(meth)acrylat, Diallylphthalat, Butandioldivinylether.

Diese mehrfach ungesättigten Monomeren dürfen durch ihre Verwendung die Löslichkeit des Produkts nicht zu weit herabsetzen, so daß die Herstellung einer Polymerlösung mit beispielsweise mindestens 5%-iger Polymerkonzentration noch möglich wird. Nach diesem Maßstab hat sich eine Entscheidung über die Einsatzmenge der Monomeren D und insbesondere der mehrfach ungesättigten zu richten.

Die genannten Monomere D können je nach Anwendung dem zu festigenden Material angepaßt und je nach gewünschter Hydrophobie bzw. Festigkeit für eine Feinoptimierung der Produkteigenschaften gewählt werden.

Die Anwendungskonzentration der Polymerlösung hat sich nach der vom Lösemittel und Polymertyp abhängigen Viskosität zu richten, da diese Größe für die Eindringtiefe des Schutzmittels im Stein bestimmend ist. Vorteilhaft ist eine Lösungsviskosität kleiner als 10 cP (gemessen am Haake Rotovisko RV12 bei 23°C).

Bedingt durch den Wunsch, die höchstmögliche Konzentration bei der kleinstmöglichen Viskosität zu erreichen, soll das Molekulargewicht des Prepolymeren niedrig gehalten werden. Mit den in dieser Erfindung beschriebenen Produkten sind Anwendungskonzentrationen bis über 70 % möglich, bevorzugt werden aber ca. 20 - 40%ige Lösungen, insbesondere ca. 30%ige, verwendet.

Die Erfindung betrifft auch mit dem o.g. Prepolymer imprägnierte Baumaterialien sowie entsprechende Verfahren zur Imprägnierung der Baumaterialien.

Die Erfindung wird im folgenden anhand von Figuren und Beispielen näher ausgeführt.

Es zeigen

Fig. 1 eine REM-Aufnahme eines unbehandelten Steins;

Fig. 2 eine REM-Aufnahme eines Steins nach der Imprägnierung:

Fig. 3a einen Ausschnitt aus Fig. 2 mit Polymerfilm; und

Fig. 3b eine zeichnerische Darstellung von Fig. 3a.

In der vorliegenden Beschreibung der Erfindung steht "Tränkung" für den eigentlichen Vorgang der Applikation von Baumaterialien- oder Steinschutzstoffen. Die Mittel werden flutend auf den (mineralischen) Untergrund aufgebracht, wobei mehrere Applikationsverfahren zur Verfügung stehen (z.B. sequenzielles Fluten, kontinuierliches Tränken).

Eine Imprägnierung ist eine Schutzbehandlung poröser Baustoffe, die das Porensystem nicht verstopft und weitgehende Schutzfunktion gegenüber Atmoshärilien gewährleistet.

Die Imprägnierung unterscheidet sich von der Versiegelung, die die Füllung von oberflächennahen Poren eines porösen Substrats beschreibt im Sinne einer Tiefengrundierung unter Bildung eines dünnen zusammenhängenden Oberflächenfilms mit Schutzfunktionen gegenüber mechanischen und chemischen Beanspruchungen. Die Gesteinsoberfläche wird dabei durch einen dünnen Oberflächenfilm bedeckt. Zu den die Poren füllenden Behandlungen gehört auch die Volltränkung, die als eine besondere Form der Versiegelung angesehen werden kann: alle Gesteinsporen bis in den Kern der Steine werden hierbei vollständig gefüllt.

Die Figuren zeigen am Beispiel eines Muschelkalks, der wie nachfolgend beschrieben (Beispiel 1, Vernetzer) behandelt wurde, die erfindungsgemäße Imprägnierung. Aus Fig. 2 und 3 ist ersichtlich, daß die Poren 2 frei bleiben, einzelne Gesteinselemente 1 aber über einen Polymerfilm 3 miteinander verbunden und damit verfestigt sind.

**Beispiele für die Polymerherstellung**:

Beispiel 1:

In einem mit Kühler, Rührer und Temperiermöglichkeit ausgerüsteten 1-Liter Kolben werden 250 Teile Benzin (Siedepunkt 100 - 140°C) mit 200 Teilen n-Butylmethacrylat, 25 Teilen Butenyltriethoxysilan und 25 Teilen Glycidylmethacrylat vorgelegt. Dazu werden 5 Teile dimeres α-Methylstyrol (DAMS), 0.75 Teile Thioglykolsäureisooctylester (TGIO) und 7.5 Teile Dilauroylperoxid (LPO) gelöst. Unter starkem Rühren wird die Lösung bei 117°C zum Sieden gebracht. Jeweils nach 60 Minuten und 120 Minuten werden die schon genannten Mengen DAMS, TGIO und LPO nochmals zugegeben. 120 Minuten nach der letzten Zugabe wird die mittelviskose Polymerlösung abgekühlt. Dabei wurde eine 50.7%-ige Lösung mit $\overline{M}_W$ = 18.500 g/mol (Standard: Polystyrol) sowie einem Epoxidäquivalent von 1660 mg KOH/g Polymer erhalten.
Die Messung von Molekulargewicht und evtl. Polydispersität wird über die Gelpermeationschromatographie mit folgenden Bedingungen durchgeführt:

- Merck-Hitachi Chromatograph
- Photodiodenarray-Detektor L 3000 und RI-Detektor, Fa. Erma, Tokio, ERC-7512
- 3 Einzelsäulen, hintereinander geschaltet:
- Merck-LiChroGel PS - 1 , PS - 4, PS - 40
- Lösungsmittel: THF (Fluß: 1 ml/min)
- Standard: Polystyrol

Die Bestimmung des Epoxidäquivalentgewichts (E-Val) erfolgt nach DIN 53188.

Beispiel 2:

In einem 2 l-Reaktor mit ähnlicher Ausstattung wie im Beispiel 1 werden 500 Gew.-Teile Benzin (Siedepunkt 100 - 140°C) und 500 Teile n-Butylmethacrylat vorgelegt; darin werden 10 Teile dimeres α-Methylstyrol (DAMS), 1.8 Teile Thioglykolsäureisooctylester (TGIO) und 15 Teile Dilauroylperoxid (LPO) gelöst. Unter starkem Rühren wird die Lösung auf 112°C gebracht. Nach 90' werden 10 Teile DAMS, 1.5 Teile TGIO und 15 Teile LPO in 25 Teilen Benzin gelöst und erneut zugegeben. Die Polymerisationstemperatur wird für weitere 120' gehalten.
Nach Abkühlung erhält man eine mittelviskose 48.7%-ige Polymerlösung: das Polymer besitzt Mw = 21.000 g/mol (Standard: Polystyrol).

**Geprüfte Steine:**

Folgende Steinvarietäten wurden für die Untersuchungen verwendet:

- Ebenheider Sandstein
- Sander Schilfsandstein
- Obernkirchener Sandstein
- Krensheimer Muschelkalk.

Die aus diesen bruchfrischen Gesteinen gearbeiteten Proben sind, um Reproduzierbarkeit zu gewährleisten, urlagebenachbart. Die Proben haben die Dimensionen 50x50x100 mm. Die Kanten der Quader, d. h. die Flächen 50x100 mm, sind mit einem inerten Epoxidharz versiegelt. Dadurch wird ein umliegendes, solides Mauerwerk simuliert, die Einwirkungen können nur über die Stirnflächen 50x50 mm erfolgen. Vor der Verwendung werden die Probekörper in definiertem Klima - vorzugsweise 23°C, 50 % rel. Luftfeuchtigkeit - bis zur Massekonstanz gelagert.

**Beispiel einer Vernetzungsreaktion:**

Das Epoxidgruppen enthaltende Copolymer aus Beispiel 1 wird als 30%-ige Lösung mit einer stöchiometrischen Menge (entsprechend dem ermittelten Epoxidäquivalentgewicht) Isophorondiamin versetzt. Dieser Härter mit seinen beiden primären Amingruppen führt unter Ausbildung von β-Aminoalkoholen zu einer Vernetzung des Copolymeren. Die Mischung ist nach 10-minütigem intensivem Rühren applikationsfertig.

**Tränkung und Prüfung der Steine:**

Steinproben wie unter "Geprüfte Steine" beschrieben werden an den 50 mm x 50 mm Stirnflächen durch Abbürsten von Staub befreit. Anschließend wird durch vierstündiges kapillares Saugen über eine dieser Flächen die im vorigen Beispiel beschriebene Prepolymerlösung appliziert. Durch Wägung vor und nach der Applikation kann die Materialaufnahme bestimmt werden. Durch Spalten der Steinproben in Längsrichtung und Beobachtung der Feuchtfront wird die Eindringtiefe nach 4 Stunden bestimmt (ET 0). Die Proben werden dann wieder zusammengelegt, fixiert und 28 Tage im Klima 23°C und 50 % rel. Luftfeuchtigkeit gelagert. Nach Ablauf dieser Zeit wird durch eine erneute Spaltung in Längsrichtung, Auftragen von Wassertropfen und Beobachten des hydrophoben Effekts die Eindringtiefe nach 28 Tagen bestimmt (ET 28). Durch Präparation geeigneter Proben und Betrachtung im Rasterelektronenmikroskop (Figuren) wird festgestellt, ob ein Film im Steininnern vorhanden ist, der das Porensystem des Steins nicht verstopft.

An parallel getränkten Proben, die nicht gespalten wurden, werden die Untersuchungen im Tiefenprofil durchgeführt. Dazu werden die Steine nach Entfernung der Versiegelung in Scheiben von 50 mm x 50 mm x 4 mm gesägt. Das ergibt in Richtung des kapillaren Saugens die Tiefenprofile 0 - 4 mm, 5 - 9 mm, 10 -14 mm, usw. An diesen Steinscheiben werden folgende Messungen durchgeführt:

- kapillare Wasseraufnahme nach DIN 52617
- Randwinkel mittels Messung am Goniometermikroskop.

Die Eindringtiefen ET 0 und ET 28 werden über Randwinkelmessungen am Goniometermikroskop ermittelt.
Untersuchungen von Ebenheider Sandstein (EH) und Sander Schilfsandstein (SS), die mit einer Polymerlösung der Zusammensetzung des Beispiels 1 und einem aminotelechelischen Polydimethylsiloxan als Vernetzer getränkt wurden, ergaben folgende Werte:

<u>EH:</u> ET 0: 25 mm ET 28: 31 mm Randwinkel: 90°
Wasseraufnahme nach 360 h Wasserlagerung: 0.9 %
<u>SS:</u> ET 0: 13 mm ET 28: 14 mm Randwinkel: 90°
Wasseraufnahme nach 360 h Wasserlagerung: 0.8 %.

Auch das nicht funktionalisierte Polymer von Beispiel 2 wurde an den gleichen Steinen appliziert. Dabei wurden Eindringtiefen von 2 mm am Ebenheider Sandstein, 4 mm im Krensheimer Muschelkalk und von 0 mm am Sander Schilfsandstein erreicht. Außerdem entstehen bei Applikationen von reinem Polybuthylmethacrylat keine zusammenhängende Filme, was eine nicht ausreichende Schutzwirkung erwarten läßt.

Ein Nachweis des Konservierungsmittels sowie die Untersuchung der Eigenschaften des polymeren Überzugs und des getränkten Probekörpers kann neben diesen visuellen Methoden (REM) und makroskopischen Tests auch mit Hilfe von spektroskopischen, oberflächenanalytischen Methoden (Röntgen-Photoelektronen-Spektroskopie [XPS] oder Photoakustik-FT-Infrarotspektroskopie [PAS-FTIR]) erfolgen.

## Patentansprüche

**1.** Verwendung eines Prepolymers der Zusammensetzung

----- A ----- B ----- C ----- D -----

a b c d

worin:

A ein (Meth)acrylatester mit einer Alkoholkomponente aus einer C1 bis C18 linearen, cyclischen oder verzweigten Alkylkette oder Aromat oder eine Mischung solcher Ester ist,

B ein ethylenisch ungesättigtes, eine Epoxidfunktion tragendes Monomer ist,

C ein ethylenisch ungesättigtes, Alkoxysilangruppen tragendes Monomer ist mit der Struktur:

$$R --- P --- Si\ (OR')_{r'}R''_{r''}\ .$$

in dem

R = (Meth)acryloyloxy, Styryl, Vinyl, Allyl, Butenyl,
P = $(CH_2)_x$ und X : = 0 bis 6,
R'= C1-8, lineare, verzweigte oder cyclische Alkylkette sowie eine Phenylgruppe oder $CH_2$-O-$CH_2$-$CH_3$ und $CH_2$-$CH_2$-O-$CH_3$,
R" = C1-8, lineare, verzweigte oder cyclische Alkylkette sowie eine Phenylgruppe,

$$1 \le r' \le 3 \text{ (ganze Zahlen)}$$

$$0 \le r'' \le 2 \text{ (ganze Zahlen)}$$

und

$$r' + r'' = 3$$

ist,
und

D ein einfach oder mehrfach ungesättigtes Monomer ist, das mit A, B und ggf. C copolymerisierbar ist, und

a zu 48-98 Gew.%
b zu 0,5-50 "
c zu 0-30 "
d zu 0-50 "

vorliegen, wobei

$$a + b + c + d = 100 \text{ Gew.-\%}$$

ergibt,
zur Imprägnierung von porösen Baumaterialien.

**2.** Verwendung nach Anspruch 1,
**dadurch gekennzeichnet**,
daß das Prepolymer zusammen mit einem Vernetzer eingesetzt wird.

**3.** Imprägniertes Baumaterial,
**gekennzeichnet durch**
eine Imprägnierung erhältlich durch Tränken des Baumaterials mit einem in einem Lösungsmittel gelösten Prepolymers der Zusammensetzung

$$----- \; A \; ----- \; B \; ----- \; C \; ----- \; D \; -----$$
$$a \quad\quad b \quad\quad c \quad\quad d$$

worin:

A ein (Meth)acrylatester mit einer Alkoholkomponente aus einer C1 bis C18 linearen, cyclischen oder verzweigten Alkylkette oder Aromat oder eine Mischung solcher Ester ist,

B ein ethylenisch ungesättigtes, eine Epoxidfunktion tragendes Monomer ist,

C ein ethylenisch ungesättigtes, Alkoxysilangruppen tragendes Monomer ist mit der Struktur:

$$R --- P --- Si\,(OR')_{r'}R''_{r''}\ ,$$

in dem

R = (Meth)acryloyloxy, Styryl, Vinyl, Allyl, Butenyl,
P = $(CH_2)_x$ und x = 0 bis 6,
R' = =C1-8, lineare, verzweigte oder cyclische Alkylkette sowie eine Phenylgruppe oder $CH_2$-O-$CH_2$-$CH_3$ und $CH_2$-$CH_2$-O-$CH_3$,
R'' = C1-8, lineare, verzweigte oder cyclische Alkylkette sowie eine Phenylgruppe,

$$1 \leq r' \leq 3 \text{ (ganze Zahlen)}$$

$$0 \leq r'' \leq 2 \text{ (ganze Zahlen)}$$

und

$$r' + r'' = 3$$

ist,
und

D ein einfach oder mehrfach ungesättigtes Monomer ist, das mit A, B und ggf. C copolymerisierbar ist, und

a zu 48-98 Gew.%
b zu 0.5-50 "
c zu 0-30 "
d zu 0-50 "

vorliegen, wobei

$$a + b + c + d = 100 \text{ Gew.-\%}$$

ergibt.

4. Imprägniertes Baumaterial nach Anspruch 3, **dadurch gekennzeichnet,** daß das Prepolymer im Baumaterial mit einem Vernetzer vernetzt ist.

5. Verfahren zur Imprägnierung von Baumaterialien durch Tränken eines Baumaterials mit einem in einem Lösungsmittel gelösten Prepolymer, **dadurch gekennzeichnet,** daß ein Prepolymer der Zusammensetzung

$$----- \underset{a}{A} \; ----- \underset{b}{B} \; ----- \underset{c}{C} \; ----- \underset{d}{D} \; -----$$

worin:

A ein (Meth)acrylatester mit einer Alkoholkomponente aus einer C1 bis C18 linearen, cyclischen oder verzweigten Alkylkette oder Aromat oder eine Mischung solcher Ester ist,

B ein ethylenisch ungesättigtes, eine Epoxidfunktion tragendes Monomer ist,

C ein ethylenisch ungesättigtes, Alkoxysilangruppen tragendes Monomer ist mit der Struktur:

$$R --- P --- Si\,(OR')_{r'}R''_{r''}\,,$$

in dem

R = (Meth)acryloyloxy, Styryl, Vinyl, Allyl, Butenyl,
P = $(CH_2)_x$ und x = 0 bis 6,
R' = C1-8, lineare, verzweigte oder cyclische Alkylkette sowie eine Phenylgruppe oder $CH_2$-O-$CH_2$-$CH_3$ und $CH_2$-$CH_2$-O-$CH_3$
R'' = C1-8, lineare, verzweigte oder cyclische Alkylkette sowie eine Phenylgruppe,

$$1 \leq r' \leq 3 \text{ (ganze Zahlen)}$$

$$0 \leq r'' \leq 2 \text{ (ganze Zahlen)}$$

und

$$r' + r'' = 3$$

ist,
und

D ein einfach oder mehrfach ungesättigtes Monomer ist, das mit A, B und ggf. C copolymerisierbar ist, und

a zu 48-98 Gew.%
b zu 0,5-50 "
c zu 0-30 "
d zu 0-50 "

vorliegen, wobei

$$a + b + c + d = 100 \text{ Gew.\%}$$

ergibt,
eingesetzt wird.

6. Verfahren nach Anspruch 5,
**dadurch gekennzeichnet,**
daß das Prepolymer in dem Baumaterial vernetzt wird.

7. Verfahren nach Anspruch 6,
**dadurch gekennzeichnet,**
daß ein Vernetzer dem in dem Lösungsmittel gelösten Prepolymer beigefügt oder das mit dem Prepolymer getränkte Baumaterial mit einem Vernetzer getränkt wird.

**Claims**

1. Use of a prepolymer of the composition

```
----- A  ----- B  -----  C  -----  D  -----
      a          b          c          d
```

in which:

A is a (meth)acrylate with an alcohol component from a C1 to C18 linear, cyclic or branched alkyl chain or aromatic compound or a mixture of such esters,
B is an ethylenically unsaturated monomer with an epoxide function,
C is an ethylenically unsaturated monomer carrying an alkoxysilane group, with the structure:

$$R \text{ --- } P \text{ --- } Si\,(OR')_{r'}R''_{r''}\,,$$

in which:

R = (meth)acryloyloxy, styryl, vinyl, allyl, butenyl,
P = $(CH_2)_x$ and x = 0 to 6,
R' = a C1-8, linear, branched or cyclic alkyl chain or a phenyl group or $CH_2$-O-$CH_2$-$CH_3$ and $CH_2$-$CH_2$-O-$CH_3$,
R" = a C1-8, linear, branched or cyclic alkyl chain or a phenyl group,

$$1 \leq r' \leq 3 \text{ (integers)}$$

$$0 \leq r'' \leq 2 \text{ (integers)}$$

and

$$r' + r'' = 3,$$

and

D is a mono- or polyunsaturated monomer which can be copolymerised with A, B and optionally C, and

a is present at 48-98 wt.%

b is present at 0.5 - 50 wt.%
c is present at 0-30 wt.%
d is present at 0-50 wt.%, wherein

$$a + b + c + d = 100 \text{ wt.\%},$$

to impregnate porous building materials.

**2.** Use according to Claim 1, characterised in that the prepolymer is used together with a cross-linking agent.

**3.** Impregnated building material, characterised by impregnation produced by soaking the building material with a prepolymer of the composition

```
----- A ----- B ----- C ----- D -----
      a       b       c       d
```

in which:

A is a (meth)acrylate with an alcohol component from a C1 to C18 linear, cyclic or branched alkyl chain or aromatic compound or a mixture of such esters,

B is an ethylenically unsaturated monomer with an epoxide function,

C is an ethylenically unsaturated monomer carrying an alkoxysilane group, with the structure:

$$R \text{ --- } P \text{ --- } Si\,(OR')_{r'}R''_{r''},$$

in which:

R = (meth)acryloyloxy, styryl, vinyl, allyl, butenyl,
P = $(CH_2)_x$ and x = 0 to 6,
R' = a C1-8, linear, branched or cyclic alkyl chain or a phenyl group or $CH_2$-O-$CH_2$-$CH_3$ and $CH_2$-$CH_2$-O-$CH_3$,
R" = a C1-8, linear, branched or cyclic alkyl chain or a phenyl group,

$$1 \le r' \le 3 \text{ (integers)}$$

$$0 \le r'' \le 2 \text{ (integers) and}$$

$$r' + r'' = 3,$$

and

D is a mono- or polyunsaturated monomer which can be copolymerised with A, B and optionally C, and

a is present at 48-98 wt.%
b is present at 0.5 - 50 wt.%
c is present at 0-30 wt.%
d is present at 0-50 wt.%, wherein

$$a + b + c + d = 100 \text{ wt.\%},$$

dissolved in a solvent.

**4.** Impregnated building material according to Claim 3, characterised in that the prepolymer is cross-linked in the building material using a cross-linking agent.

**5.** Process for impregnating building materials by soaking a building material in a prepolymer dissolved in a solvent, characterised in that a prepolymer of the composition

$$\text{-----}\ \underset{a}{A}\ \text{-----}\ \underset{b}{B}\ \text{-----}\ \underset{c}{C}\ \text{-----}\ \underset{d}{D}\ \text{-----}$$

in which:

A is a (meth)acrylate with an alcohol component from a C1 to C18 linear, cyclic or branched alkyl chain or aromatic compound or a mixture of such esters,

B is an ethylenically unsaturated monomer with an epoxide function,

C is an ethylenically unsaturated monomer carrying an alkoxysilane group, with the structure:

$$R\ \text{---}\ P\ \text{---}\ Si\ (OR')_{r'}R''_{r''}\ ,$$

in which:

R = (meth)acryloyloxy, styryl, vinyl, allyl, butenyl,
P = $(CH_2)_x$ and x = 0 to 6,
R' = a C1-8, linear, branched or cyclic alkyl chain or a phenyl group or $CH_2$-O-$CH_2$-$CH_3$ and $CH_2$-$CH_2$-O-$CH_3$,
R" = a C1-8, linear, branched or cyclic alkyl chain or a phenyl group,

$$1 \le r' \le 3 \text{ (integers)}$$

$$0 \le r'' \le 2 \text{ (integers)}$$

and

$$r' + r'' = 3,$$

and

D is a mono- or polyunsaturated monomer which can be copolymerised with A, B and optionally C, and

a is present at 48-98 wt.%
b is present at 0.5 - 50 wt.%
c is present at 0-30 wt.%
d is present at 0-50 wt.%, wherein

$$a + b + c + d = 100 \text{ wt.\%},$$

is used.

6. Process according to Claim 5, characterised in that the prepolymer is cross-linked in the building material.

7. Process according to Claim 6, characterised in that a cross-linking agent is added to the prepolymer dissolved in the solvent or the building material soaked with prepolymer is soaked with a cross-linking agent.

**Revendications**

1. Utilisation d'un prépolymère de composition :

$$----- A_a \quad ----- B_b \quad ----- C_c \quad ----- D_d \quad -----$$

dans laquelle,

A est un ester (méth)acrylique ayant un composant alcool choisi parmi une chaîne alcoyle linéaire, cyclique ou ramifiée en $C_1$-$C_{18}$, ou un aromatique ou un mélange de tels esters,
B est un monomère éthyléniquement non saturé, portant une fonction époxyde,
C est un monomère éthyléniquement non saturé, portant des groupes alcoxysilanes avec la structure :

$$R --- P --- Si\ (OR')_{r'}R''_{r''}\ ,$$

dans laquelle,

R = un (méth)acryloyloxy, un styryl, un vinyl, un allyl ou un buténlyle,
P = $(CH_2)_x$ et x = 0 à 6,
R' = une chaîne alcoyle en $C_1$-$C_8$ linéaire ramifiée ou cyclique ainsi qu'un groupe phényle ou $CH_2$-O-$CH_2$-$CH_3$ et $CH_2$-$CH_2$-O-CH3,
R" = une chaîne alcoyle en $C_1$ à $C_8$ linéaire ramifiée ou cyclique ainsi qu'un groupe phényle,

$$1 \leq r' \leq 3 \text{ (nombres entiers)},$$

$$0 \leq r' \leq 2 \text{ (nombres entiers)},$$

et

$$r' + r'' = 3,$$

et

D est un monomère une fois ou plusieurs fois non saturé qui est copolymérisable avec A, B et éventuellement C, et

a est présent pour 48-98 % en poids,
b est présent pour 0,5-50 % en poids,
c est présent pour 0-30 % en poids,
d est présent pour 0-50 % en poids,

pour lesquels,
a + b + c + d a pour résultat 100 % en poids,

en vue de l'imprégnation de matériaux de construction poreux.

**2.** Utilisation selon la revendication 1, caractérisée en ce que le prépolymère est mis en jeu conjointement avec un agent réticulant.

**3.** Matériau de construction imprégné, caractérisé en ce que l'on obtient une imprégnation, par imbibition du matériau de construction dans un prépolymère dissous dans un solvant, prépolymère de formule :

$$----- A_a \quad ----- B_b \quad ----- C_c \quad ----- D_d \quad -----$$

dans laquelle,

A est un ester (méth)acrylique ayant un composant alcool choisi parmi les chaînes alcoyle $C_1$-$C_{18}$, linéaires, cycliques ou ramifiées ou aromatiques ou un mélange de tels esters,
B est un monomère éthyléniquement non saturé, portant une fonction époxyde,
C est un monomère éthyléniquement non saturé, portant des groupes alcoxysilanes avec la structure :

$$R --- P --- Si\ (OR')_{r'}R''_{r''}\ ,$$

dans laquelle,

R = un (méth)acryloyloxy, styryl, vinyl, allyl ou butényle,
P = $(CH_2)_x$ et x = 0 à 6,
R' = une chaîne alcoyle en $C_1$-$C_8$ linéaire ramifiée ou cyclique ainsi qu'un groupe phényle ou $CH_2$-O-$CH_2$-$CH_3$ et $CH_2$-$CH_2$-O-CH3,
R" = une chaîne alcoyle en $C_1$ à $C_8$ linéaire ramifiée ou cyclique ainsi qu'un groupe phényle,

$$1 \leq r' \leq 3 \text{ (nombres entiers)}$$

$$0 \leq r'' \leq 2 \text{ (nombres entiers),}$$

et

$$r' + r'' = 3,$$

et

D est un monomère une fois ou plusieurs fois non saturé qui est copolymérisable avec A, B et éventuellement C, et

a est présent pour 48-98 % en poids
b est présent pour 0,5-50 % en poids
c est présent pour 0-30 % en poids
d est présent pour 0-50 % en poids

pour lesquels, a + b + c + d donne = 100 % en poids.

**4.** Matériau de construction imprégné selon la revendication 3, caractérisé en ce que le prépolymère est réticulé dans le matériau de construction avec un agent de réticulation.

**5.** Procédé d'imprégnation de matériaux de construction par saturation d'un matériau de construction avec un prépolymère dissous dans un solvant,
caractérisé en ce que
l'on met en oeuvre un prépolymère de composition :

$$----- A_a \quad ----- B_b \quad ----- C_c \quad ----- D_d \quad -----$$

dans laquelle,

A est un ester (méth)acrylique ayant un composant alcool choisi parmi les chaînes alcoyle $C_1$-$C_{18}$, linéaires, cycliques ou ramifiées ou les aromatiques ou un mélange de tels esters,
B est un monomère éthyléniquement non saturé, portant une fonction époxyde,
C est un monomère éthyléniquement non saturé, portant des groupes alcoxysilanes avec la structure :

$$R --- P --- Si\ (OR')_{r'}R''_{r''}\ ,$$

dans laquelle,

R = un (méth)acryloyloxy, styryl, vinyl, allyl ou buténylе,
P = $(CH_2)_x$ et x = 0 à 6,
R' = une chaîne alcoyle en $C_1$-$C_8$ linéaire ramifiée ou cyclique ainsi qu'un groupe phényle ou $CH_2$-O-$CH_2$-$CH_3$ et $CH_2$-$CH_2$-O-CH3,
R" = une chaîne alcoyle en $C_1$ à $C_8$ linéaire ramifiée ou cyclique ainsi qu'un groupe phényle,

$$1 \leq r' \leq 3 \text{ (nombres entiers)}$$

$$0 \leq r'' \leq 2 \text{ (nombres entiers)},$$

et

$$r' + r' = 3,$$

et

D est un monomère une fois ou plusieurs fois non saturé qui est copolymérisable avec A, B et éventuellement C, et

a est présent pour 48-98 % en poids
b est présent pour 0,5-50 % en poids
c est présent pour 0-30 % en poids
d est présent pour 0-50 % en poids

pour lesquels, a + b + c + d donne = 100 % en poids.

**6.** Procédé selon la revendication 5,
caractérisé en ce que
le prépolymère est réticulé dans le matériau de construction.

**7.** Procédé selon la revendication 6,
**caractérisé en ce que**
l'on ajoute un agent de réticulation au prépolymère dissous dans le solvant ou bien on imprègne le matériau de construction imprégné par le prépolymère, avec un agent de réticulation.

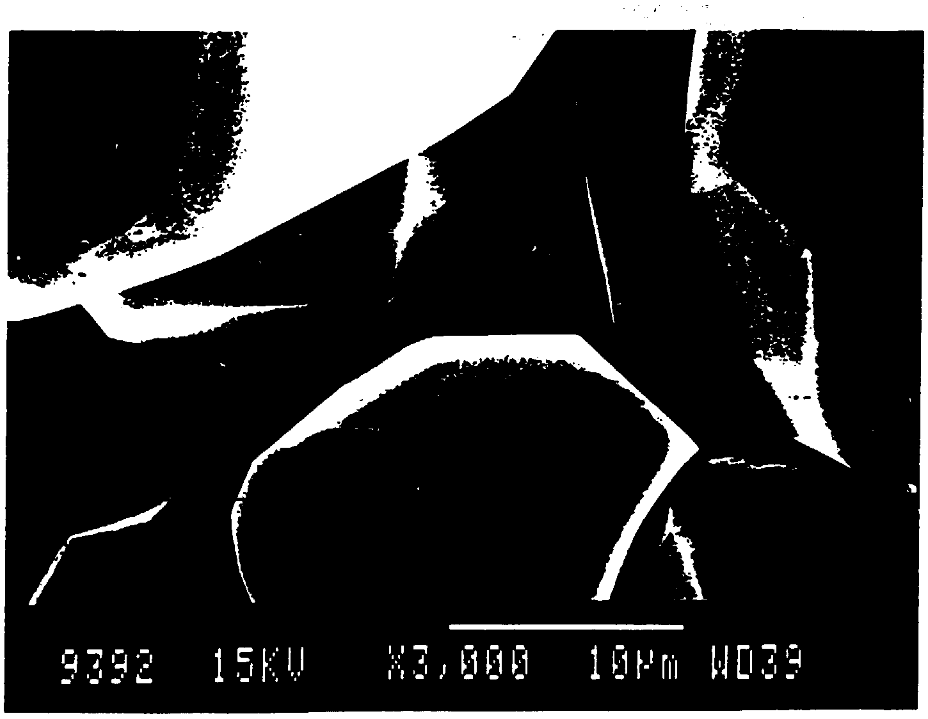


Fig. 1

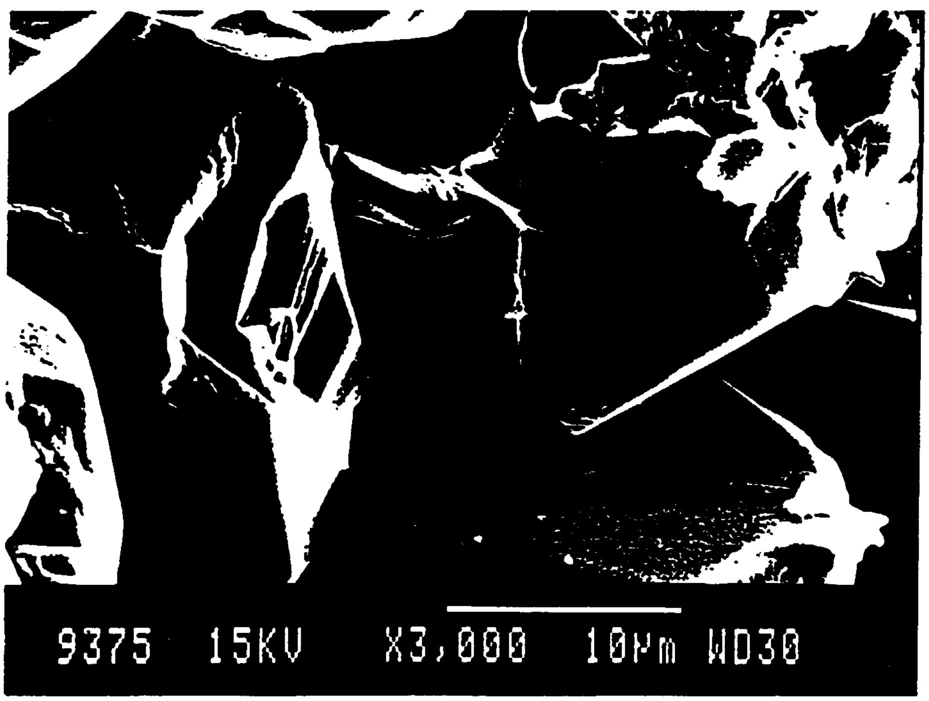


Fig. 2

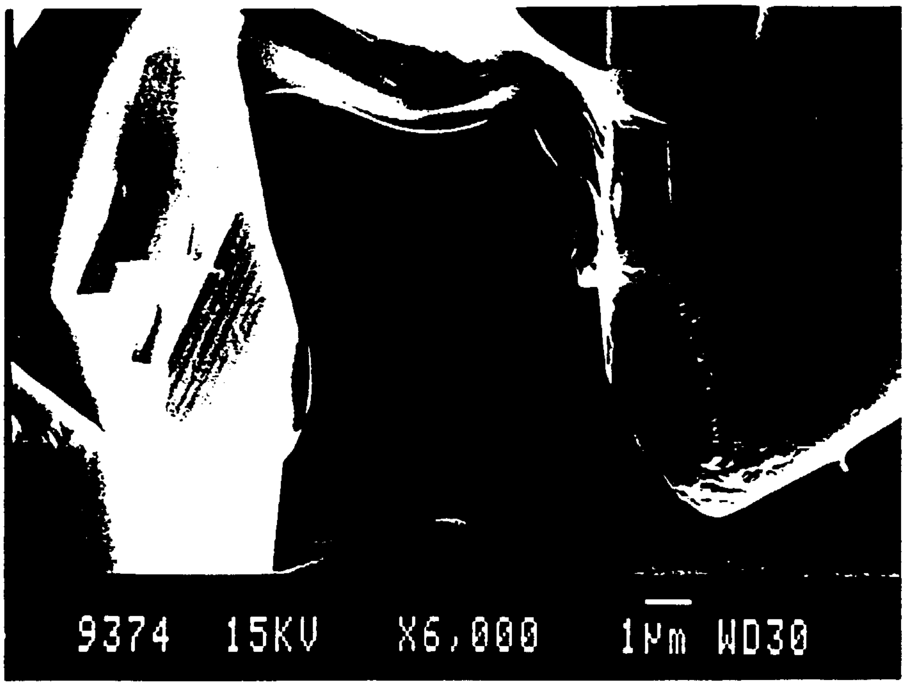


Fig. 3a

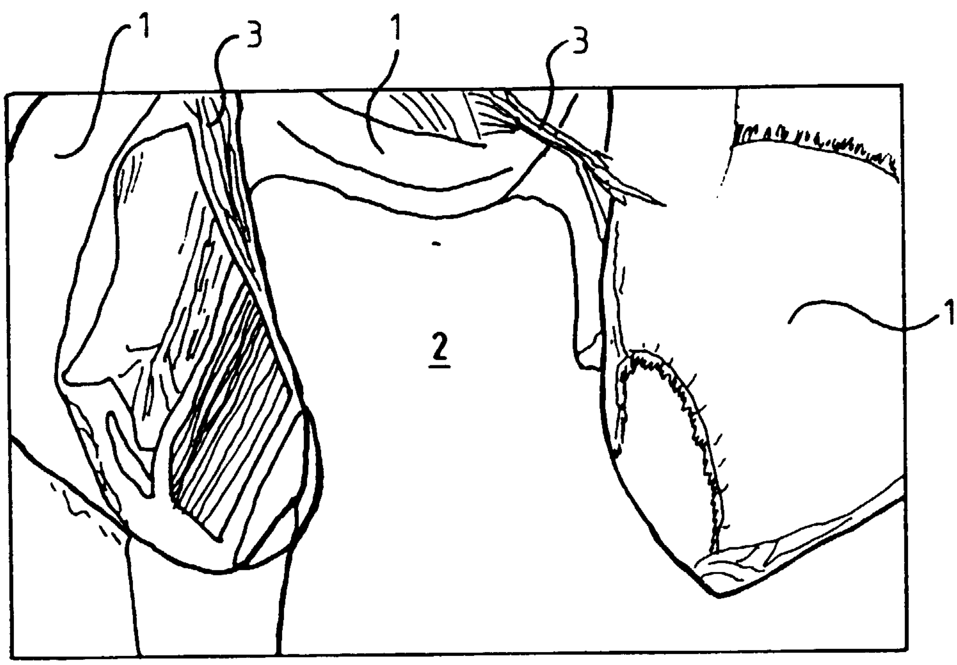


Fig. 3b